# EUROPEAN PATENT SPECIFICATION

(11) **EP 2 926 902 B1**
(45) Date of publication and mention of the grant of the patent: **13.01.2021**
(21) Application number: 13859125.0
(22) Date of filing: 07.06.2013
(51) Int. Cl.: B01J 23/68, B01D 53/94, F01N 3/10, F01N 3/24

(54) **CATALYST FOR DISCHARGE GAS PURIFICATION**
ABGASREINIGUNGSKATALYSATOR
CATALYSEUR POUR PURIFICATION DE GAZ D'ÉCHAPPEMENT

(30) Priority: 27.11.2012 JP 2012259002
(43) Date of publication of application: 07.10.2015
(73) Proprietor: Mitsui Mining and Smelting Co., Ltd., Shinagawa-ku Tokyo 141-8584 (JP)
(72) Inventor: TAKAHASHI, Susumu, Ageo-shi Saitama 362-0021 (JP); WATANABE, Hiromu, Ageo-shi Saitama 362-0021 (JP); SENOO, Yuichi, Ageo-shi Saitama 362-0021 (JP); SUGIOKA, Akiko, Ageo-shi Saitama 362-0021 (JP)
(74) Representative: Casalonga
(86) International application number: PCT/JP2013/065799
(87) International publication number: WO 2014/083869

(56) References cited:
- WO-A1-2012/093599
- WO-A1-2012/093600
- JP-A- 2009 112 962
- US-A1- 2010 242 458
- SATU OJALA ET AL: "Catalysis in VOC Abatement", TOPICS IN CATALYSIS, KLUWER ACADEMIC PUBLISHERS-PLENUM PUBLISHERS, NE, vol. 54, no. 16 - 18, 8 September 2011 (2011-09-08), pages 1224-1256, XP019970072, ISSN: 1572-9028, DOI: 10.1007/S11244-011-9747-1

## Description

### Technical Field

The present invention relates to an exhaust gas purifying catalyst which is employed for purifying an exhaust gas discharged from an internal combustion engine of an automobile or the like.

### Background Art

An exhaust gas discharged from an internal combustion engine of an automobile or the like contains toxic components such as hydrocarbon, carbon monoxide, and nitrogen oxides.

Particularly, an exhaust gas discharged from a diesel engine contains particulates (PM; particulate matter). Once PM is released to air without any treatment, the released PM causes air pollution. One known effective means for removing particulates is a diesel exhaust gas trap system employing a diesel particulate filter (DPF) for collecting soot.

Meanwhile, in one proposed means for effectively purifying a diesel exhaust gas, a diesel oxide catalyst (DOC) is placed at a site in the closest vicinity to the diesel engine, to thereby promote gas purification reaction by heat generated by the engine. However, the space within the engine compartment is limited, and downscaling of the DOC is required. That is, there is a problem of a trade-off relationship between enhancement in gas purification efficiency by heat and a decrease in absolute reaction area due to downscaling.

A conceivable solution for solving the problem is that gas purifying performance is added to a DPF for burning PM, to thereby enhance the total performance of an exhaust gas purifying system. For example, there has been proposed a particulate-oxidizing agent which can burn off particulates and which reduces NOx, for cleaning the exhaust gas (see Patent Document 1). Another catalyst is described in DE 11 2011 104676. It comprises:
- a catalyst carrier comprising a ceramic or a metal material;
- a composite oxide of formula Y₁₋ₓAₓMn_{2-z}B_{z}O₅, in which A is La, Sr, Ce, Ba, Ca, Sc, Ho, Er, Tm, Yb, Lu, or Bi; B is Co, Fe, Ni, Cr, Mg, Ti, Nb, Ta, Cu or Ru; 0.5≥x≥0 and 1≥z≥0, supported on top of the catalyst carrier, and
- at least one element selected from Ag, Pt, Au, Pd, Rh, Cu, and Mn supported by the composite oxide.
However, there is demand for more enhanced exhaust gas purification performance.

### Prior Art Documents

### Patent Documents

Patent Document 1: Japanese Patent Application Laid-Open (*kokai*) No. 2003-334443

### Summary of the Invention

### Problems to be Solved by the Invention

An object of the present invention is to provide an exhaust gas purifying catalyst which can burn off particulates present in an exhaust gas discharged from an internal combustion engine of an automobile or the like and which has excellent gas purifying performance.

### Means for Solving the Problems

The present inventors have conducted various experiments with various substances to attain the object, and have found that an LaMn₂O₅-type complex oxide exhibits a gas purification performance more excellent than that of LaMnO₃ and that such a complex oxide having an Mn content greater than the La content; i.e., having an Mn/La ratio of greater than 2, exhibits excellent resistance to poisoning by sulfur (hereinafter referred to as "sulfur poisoning resistance"), can burn off particulates, and has excellent gas purifying performance. The present invention has been accomplished on the basis of these findings.

Accordingly, a characteristic feature of one mode of the exhaust gas purifying catalyst of the present invention resides in that the catalyst comprises a complex oxide which is represented by LaMnₓO₅ which contains Ag., wherein x is greater than 2.

Preferably, at least a part of Ag atoms form a solid solution with crystals of the aforementioned complex oxide.

Also, a catalyst layer supported on a catalyst support preferably contains the aforementioned complex oxide, and Ag is deposited on the catalyst layer.

Also preferably, the catalyst layer supported on the catalyst support contains the aforementioned complex oxide, and at least one element selected from among Pt, Au, Pd, and Rh is deposited on the catalyst layer.

### Effects of the Invention

The exhaust gas purifying catalyst of the present invention can burn off particulates present in an exhaust gas and has excellent gas purifying performance. Thus, the catalyst is effective for purifying the exhaust gas discharged from an internal combustion engine of an automobile or the like.

### Brief Description of the Drawings

[FIG. 1] Charts showing XRDs of the exhaust gas purifying catalysts of Examples 1 and 2, and Comparative Example 1.
[FIG. 2] An enlarged portion of the peak shift in the XRD of Example 2.
[FIG. 3] An enlarged portion of the Ag peaks in the XRDs of the exhaust gas purifying catalysts of Examples 1 and 2, and Comparative Example 1.

### Modes for Carrying Out the Invention

The exhaust gas purifying catalyst of the present invention will next be described in detail.

A characteristic feature of the exhaust gas purifying catalyst of the present invention resides in that the catalyst comprises a complex oxide which is represented by LaMnₓO₅ which contains Ag., and wherein x is greater than 2.

LaMn₂O₅ exhibits a gas purification performance more excellent than that of LaMnO₃. Generally, a complex oxide including La and Mn tends to have an LaMnO₃-type crystal structure. However, in the present invention, LaMn₂O₅ is formed as a result of crystallization in the presence of Ag.

LaMnₓO₅ is preferably composed of crystals having a DyMn₂O₅-type structure.

As used herein, the term "complex oxide composed of crystals having a DyMn₂O₅-type structure" refers to an oxide whose XRD pattern is identified as a crystal having a dysprosium manganate-type structure (a DyMn₂O₅-type structure, see ICSD (Inorganic crystal structure database)), which belongs to the space group Pbam. Generally, the complex oxide composed of crystals having a DyMn₂O₅-type structure is represented by formula AB₂O₅.

Among LaMnₓO₅-type oxides, stoichiometric LaMn₂O₅ exhibits a relatively weak peak attributed to a DyMn₂O₅-type crystal structure in XRD. In other words, LaMn₂O₅ does not tend to have a DyMn₂O₅-type crystal structure, as compared with the case in which x is greater than 2. In the case where x is greater than 2; that is, in the case where the complex oxide has an Mn content greater than the La content (i.e., the Mn/La ratio is greater than 2), the complex oxide LaMnₓO₅ readily has a DyMn₂O₅-type crystal structure, and exhibits a relatively strong peak attributed to a DyMn₂O₅-type crystal structure in XRD.

An excess amount of Mn forms a solid solution with LaMnₓO₅ crystals. Formation of a solid solution of Mn with the aforementioned crystal refers to the following states. Specifically, peaks attributed to a DyMn₂O₅-type structure are observed in an XRD pattern, although Mn is present in excess of the stoichiometric amount thereof. Also, a certain shift of 2θ is observed in an XRD peak due to a B site element (Mn) forming the solid solution having an ionic radius smaller than that of an A site element (La). In this case, even when a peak which is attributed to Mn and which is not assigned to the DyMn₂O₅-type structure is observed, if a 2θ shift is observed in an XRD peak assigned to the DyMn₂O₅-type structure, at least a part of excess B site elements are conceived to form a solid solution in a crystal lattice.

In addition to such an Mn-excess complex oxide, the exhaust gas purifying catalyst of the present invention may also contain an Mn oxide, such as manganese oxide. Such an exhaust gas purifying catalyst also falls within the scope of the present invention.

The exhaust gas purifying catalyst of the present invention further contains Ag. The concept "containing Ag" is equivalent to co-presence of the aforementioned complex oxide with Ag. At least a part of Ag atoms preferably forms a solid solution with crystals of the aforementioned complex oxide. As described above, when Ag is co-present during crystallization, LaMnₓO₅ crystals tend to be produced. In this case, at least part of Ag atoms co-present during crystallization forms a solid solution with the complex oxide crystals.

The concept "forming a solid solution of at least a part of Ag atoms with the aforementioned crystals" corresponds to the intensity of the peak attributed to metallic Ag in an XRD pattern being considerably lower than the intensity estimated by the absolute Ag content.

The complex oxide of the present invention may be produced through, for example, the following procedure.

In one production procedure, a precipitant is added to a solution containing La and Mn, to thereby form precipitates having an atomic ratio Mn/La greater than 2 and the precipitates are dried and fired to form a complex oxide LaMnₓO₅. As used herein, the stoichiometric ratio LaMn₂O₅ and a slightly non-stoichiometric ratio LaMn₂O₅ are collectively represented by LaMnₓO₅.

In an alternative manner, a complex oxide having a stoichiometric Mn/La ratio is produced, and an excessive amount of Mn is deposited.

Ag may be deposited through a technique such as evaporation of a solution of silver nitrate or the like to dryness, or mixing metallic Ag under dry conditions.

In one preferred mode, the complex oxide of the present invention is used as a catalyst layer supported on the catalyst support.

The catalyst support is generally made of a ceramic or metallic material. No particular limitation is imposed on the shape of the catalyst support, and the catalyst support is generally has a shape of a honeycomb plate, a plate, a pellet, a DPF, or the like. Of these, a honeycomb shape and a DPF are preferred. Examples of the material of catalyst support include ceramic materials such as alumina (Al₂O₃), mullite (3Al₂O₃-2SiO₂), cordierite (2MgO-2Al₂O₃-5SiO₂), aluminum titanate (Al₂TiO₅), and silicon carbide (SiC), and metallic materials such as stainless steel.

Through depositing at least one element selected from the group consisting of Ag, Pt, Au, Pd, Rh, Cu, and Mn on the catalyst layer, the catalyst has an enhanced particulate burning off performance and gas purifying performance. The amount of deposited metallic element, with respect to the sum of the amount of metallic element and the carrier, is 0.01 to 50%, preferably 0.1 to 20%, from the viewpoint of enhancement in exhaust gas purifying performance.

Alternatively, the catalyst layer on which at least one element selected from the group consisting of Ag, Pt, Au, Pd, Rh, Cu, and Mn on the catalyst layer has been deposited may be disposed on the catalyst support. That is, the thus-produced exhaust gas purifying catalyst has a structure including a catalyst support made of a ceramic or metallic material, a complex oxide deposited on the catalyst support, and at least one element selected from the group consisting of Ag, Pt, Au, Pd, Rh, Cu, and Mn deposited on the complex oxide. In this case, excellent particulate burning off performance and gas purifying performance can be attained. Examples

The present invention will next be described in detail by way of the Examples and Comparative Example.

### Example 1 (reference)

A lanthanum nitrate solution and a manganese nitrate solution, having a known metal concentration, were mixed so that the Mn/La ratio was adjusted to 2. The mixture was diluted with ion exchange water to a final LaMn₂O₅ concentration of 50 g/L. The diluted product was employed as a mother solution. Separately, 2.5% aqueous NH₃ (26.59 mL) and 30% aqueous hydrogen peroxide (11.33 mL) were mixed together, and the aqueous solution was diluted with ion exchange water, to thereby adjust the total volume to 265.9 mL. The diluted product was employed as a precipitant. Then, the precipitant was added dropwise to the mother solution, to thereby form precipitates. The precipitates were filtered, washed, and heated, to thereby yield a powder.

Water (37.5 g) was added to silver nitrate (0.124 g) with stirring, to thereby prepare aqueous silver nitrate solution. To the thus-prepared aqueous solution, the above-prepared powder (1.5 g) was added, and the mixture was heated, to thereby prepare an exhaust gas purifying catalyst of Example 1. The exhaust gas purifying catalyst was found to have an Ag amount, with respect to the sum of the amount of metallic Ag and the amount of the carrier, of 5.57 mass%.

### Example 2

A lanthanum nitrate solution and a manganese nitrate solution, having a known metal concentration, were prepared. The two solutions were mixed so that the Mn/La ratio was adjusted to be 2.66 (x = 2.66). The mixture was diluted with ion exchange water to a final LaMnₓO₅ concentration of 50 g/L. The diluted product was employed as a mother solution. Separately, 2.5% aqueous NH₃ (32.44 mL) and 30% aqueous hydrogen peroxide (15.07 mL) were mixed together, and the aqueous solution was diluted with ion exchange water, to thereby adjust the total volume to 265.9 mL. The diluted product was employed as a precipitant.

Then, the precipitant was added dropwise to the mother solution, to thereby form precipitates. The precipitates were filtered, washed, and heated, to thereby yield a powder.

Ion exchange water (37.5 g) was added to silver nitrate (0.124 g) with stirring, to thereby prepare aqueous silver nitrate solution. The above-prepared powder (1.5 g) was added to the silver nitrate solution, and the mixture was heated, to thereby prepare an exhaust gas purifying catalyst of Example 2. The exhaust gas purifying catalyst was found to have an Ag amount, with respect to the sum of the amount of metallic Ag and the amount of the carrier, of 5.57 mass%.

### Comparative Example 1

A lanthanum nitrate solution and a manganese nitrate solution, having a known metal concentration, were mixed so that the Mn/La ratio was adjusted to 1. The mixture was diluted with ion exchange water to a final LaMnO₃ concentration of 50 g/L. The diluted product was employed as a mother solution. Separately, 2.5% aqueous NH₃ (15.43 mL) and 30% aqueous hydrogen peroxide (6.53 mL) were added to the mother solution, to thereby adjust the total volume to 265.9 mL. This product was employed as a precipitant. Then, the precipitant was added dropwise to the mother solution, to thereby form precipitates. The precipitates were filtered, washed, and heated, to thereby yield a powder.

Ion exchange water (37.5 g) was added to silver nitrate (0.124 g) with stirring, to thereby prepare aqueous silver nitrate solution. The above-prepared powder (1.5 g) was added to the silver nitrate solution, and the mixture was heated, to thereby prepare an exhaust gas purifying catalyst of Comparative Example 1. The exhaust gas purifying catalyst was found to have an Ag amount, with respect to the sum of the amount of metallic Ag and the amount of the carrier, of 5.57 mass%.

### <XRD measurement>

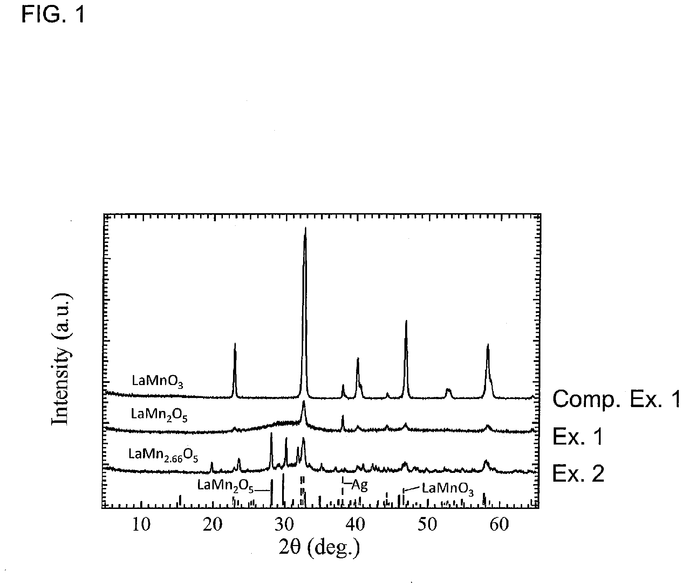

The exhaust gas purifying catalysts of Examples 1 and 2, and Comparative Example 1 were treated in air at high temperature for a long period (700°C for 30 hours). Thereafter, X-ray diffractometry of each catalyst was performed. FIG. 1 shows XRD patterns.

No peak attributed to manganese oxide was observed in the XRD patterns. Thus, the exhaust gas purifying catalyst of Example 1 is conceived to contain crystalline LaMnO₃ and amorphous LaMn₂O₅. In Example 2 in which the Mn/La ratio was 2.66, the catalyst was found to have a DyMn₂O₅ structure.

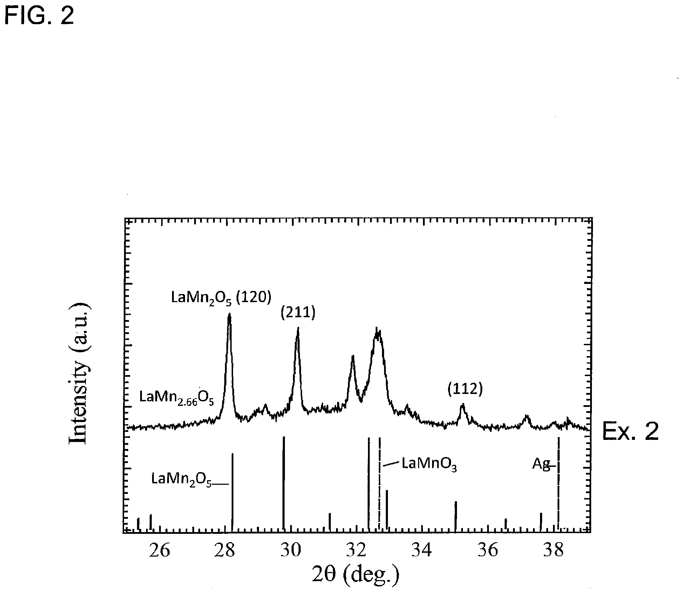

As shown in FIG. 2, in Example 2, no peak attributed to excess Mn was observed, and the peak attributed to the DyMn₂O₅-type structure was shifted. Thus, the entirety of the excess Mn was found to form a solid solution with crystals of the complex oxide.

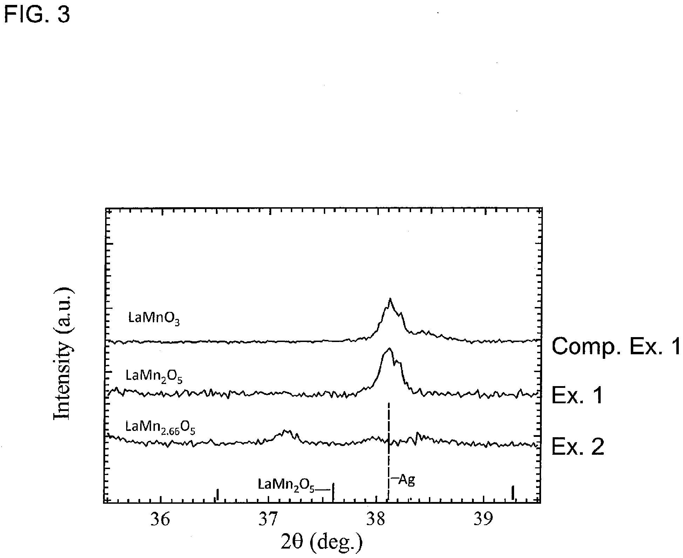

Furthermore, as shown in FIG. 3, the Ag peak height obtained in Example 2 was lower than the Ag peak height obtained in Comparative Example 1, although the same amount of Ag was employed in Example 2 and Comparative Example 1. Thus, in Example 2, at least a part of Ag atoms were found to form a solid solution with crystals of the complex oxide.

### <Fixed-bed-simulated gas purifying performance evaluation test>

The exhaust gas purifying catalysts of Examples 1 and 2, and Comparative Example 1 were treated in air at high temperature for a long time (at 700°C for 30 hours). Catalytic performance of each exhaust gas purifying catalyst was assessed in the following manner.

Firstly, a catalyst powder (0.1 g) was placed in a reactor tube of a fixed bed flow reactor. The reactor was subjected to a preliminary treatment. Specifically, a simulated exhaust gas having a composition shown in Table 2 was allowed to pass through the reactor at 1 L/min, and the reactor was heated to 500°C and maintained at 500°C for 10 minutes. Subsequently, the reactor was cooled, and heated again from 100°C to 500°C at an elevation rate of 10°C/min. The outlet gas was assayed at 100 to 500°C by means of a CO/HC/NO analyzer. From the evaluation results, the temperatures at which 50% percent purification of CO or HC was attained (T50), and percent NO purification at 400°C were calculated. Table 1 shows the results. Notably, most of the removed NO was found to have been transformed into NO₂.

Table 1 also shows specific surface areas (measured through the BET method) after completion of the long-term, high-temperature treatment.

### <Fixed-bed-simulated gas purifying performance evaluation test after sulfur poisoning test>

The exhaust gas purifying catalysts of Examples 1 and 2 were poisoned by sulfur in the following manner. Specifically, each catalyst was placed in an atmosphere of a gas mixture containing SO₂ (200 ppm), O₂ (10%), and H₂O (7%), the balance being N₂ at a flow rate of 1 L/min. The catalyst was heated to 250°C at a temperature elevation rate of 10°C/min and maintained at 250°C for 20 hours. After completion of the poisoning procedure, the same fixed-bed-simulated gas purifying performance evaluation test as described above was performed.

Table 1 also shows the results.

As is clear from Table 1, the exhaust gas purifying catalysts of Examples 1 and 2 were found to have a catalytic activity higher than that of the catalyst of Comparative Example 1. Also, the exhaust gas purifying catalyst of Example 2, containing an excess amount of Mn, was found to have a catalytic activity higher than that of the catalyst of Example 1.

Regarding the gas purifying performance after the sulfur poisoning test, the catalyst of Example 2, having an Mn/La ratio of 2.66, was found to exhibit a drop in catalytic performance due to sulfur poisoning, which drop is smaller than that of the catalyst of Example 1 having an Mn/La ratio of 2. Thus, the catalyst of Example 2 has excellent sulfur poisoning resistance.

**[Table 1]**

| | T50 HC (°C) | T50 HC (°C) after S-poisoned | T50 CO (°C) | T50 CO (°C) after S-poisoned | NO purification at 400°C (%) | NO purification at 400°C (%) after S-poisoned | Specific surface area (m²/g) |
|---|---|---|---|---|---|---|---|
| Ex. 1 | 321 | 376 | 249 | 326 | 25.0 | 10.9 | 37.1 |
| Ex. 2 | 298 | 300 | 290 | 307 | 24.8 | 16.7 | 32.9 |
| Comp. Ex. 1 | 467 | - | 351 | - | 1.0 | - | 3.9 |

**[Table 2]**

| CO | O₂ | NO | C₃H₆ | CO₂ H₂O | N₂ |
|---|---|---|---|---|---|
| 1,000 ppm | 6 vol.% | 200 ppm | 500 ppmC | 10 vol.% 7 vol.% | bal |

## Claims

1. An exhaust gas purifying catalyst, **characterized by** comprising a complex oxide which is represented by LaMnₓO₅ wherein x is greater than 2, and which contains Ag.

2. An exhaust gas purifying catalyst according to claim 1, wherein at least a part of Ag atoms form a solid solution with crystals of the complex oxide.

3. An exhaust gas purifying catalyst according to claim 1 or 2, wherein the catalyst has a catalyst layer which is supported on a catalyst support and which contains the complex oxide, and Ag is deposited on the catalyst layer.

4. An exhaust gas purifying catalyst according to any one of claims 1 to 3, wherein the catalyst layer supported on the catalyst support contains the complex oxide, and at least one element selected from among Pt, Au, Pd, and Rh is deposited on the catalyst layer.

## Patentansprüche

1. Abgasreinigungskatalysator, **dadurch gekennzeichnet, dass** er ein komplexes Oxid umfasst, das durch LaMnₓO₅ repräsentiert wird, wobei x größer ist als 2, und das Ag enthält.

2. Abgasreinigungskatalysator nach Anspruch 1, wobei mindestens ein Teil der Ag-Atome eine feste Lösung mit Kristallen des komplexen Oxids bildet.

3. Abgasreinigungskatalysator nach Anspruch 1 oder 2, wobei der Katalysator eine Katalysatorschicht besitzt, die auf einem Katalysatorträger geträgert ist und die das komplexe Oxid enthält, und wobei Ag auf der Katalysatorschicht abgeschieden ist.

4. Abgasreinigungskatalysator nach einem der Ansprüche 1 bis 3, wobei die auf dem Katalysatorträger geträgerte Katalysatorschicht das komplexe Oxid enthält, und mindestens ein aus Pt, Au, Pd und Rh ausgewähltes Element auf der Katalysatorschicht abgeschieden ist.

## Revendications

1. Catalyseur de purification de gaz d'échappement, **caractérisé en ce qu'**il comprend un oxyde complexe qui est représenté par LaMnₓO₅ dans lequel x est supérieur à 2, et qui contient de l'Ag.

2. Catalyseur de purification de gaz d'échappement selon la revendication 1, dans lequel au moins une partie des atomes d'Ag forme une solution solide avec des cristaux de l'oxyde complexe.

3. Catalyseur de purification de gaz d'échappement selon la revendication 1 ou 2, dans lequel le catalyseur présente une couche de catalyseur qui est supportée sur un support de catalyseur et qui contient l'oxyde complexe, et l'Ag est déposé sur la couche de catalyseur.

4. Catalyseur de purification de gaz d'échappement selon l'une quelconque des revendications 1 à 3, dans lequel la couche de catalyseur supportée sur le support de catalyseur contient l'oxyde complexe, et au moins un élément sélectionné parmi Pt, Au, Pd et Rh est déposé sur la couche de catalyseur.
